# EUROPÄISCHE PATENTSCHRIFT

(11) **EP 2 151 310 B1**
(45) Veröffentlichungstag und Bekanntmachung des Hinweises auf die Patenterteilung: **01.11.2017**
(21) Anmeldenummer: 09166923.4
(22) Anmeldetag: 31.07.2009
(51) Int. Cl.: B29C 49/58, B29C 49/06

(54) **Vorrichtung zum Expandieren von Behältnissen**
Device for expanding containers
Dispositif d'agrandissement de récipients

(30) Priorität: 04.08.2008 DE 102008036103
(43) Veröffentlichungstag der Anmeldung: 10.02.2010
(73) Patentinhaber: Krones AG, 93073 Neutraubling (DE)
(72) Erfinder: Meinzinger, Rupert, 94356, Kirchroth (DE)
(74) Vertreter: Bittner, Bernhard

(56) Entgegenhaltungen:
- US-A- 4 552 527
- US-A- 5 454 707
- US-A- 5 711 913
- US-A1- 2004 121 038

## Beschreibung

Die Erfindung bezieht sich auf eine Vorrichtung zum Expandieren von Behältnissen. Aus dem Stand der Technik ist es seit langem bekannt, Kunststoffbehältnisse mittels Druckluft ausgehend von Vorformlingen zu expandieren. Dabei werden diese Vorformlinge in einer Blasform gehalten und mittels einer Blasdüse zu Kunststoffbehältnissen expandiert. Dabei sind aus dem Stand der Technik eine Vielzahl von Vorrichtungen bekannt, welche, um eine Abdichtung gegenüber dem Vorformling zu erreichen, eine Blasdüse gegenüber dem Tragring der Behältnisse abdichten.

In jüngerer Zeit ist man jedoch bestrebt, den besagten Tragring der Vorformlinge weniger materialaufwendig zu gestalten oder vollständig auf diesen zu verzichten. In diesem Falle steht jedoch kein Tragring mehr zur Verfügung, der zur Abdichtung des Vorformlings gegenüber einer Blasdüse verwendet werden kann oder nur ein Tragring mit geringer radialer Erstreckung.

Aus der EP 1 453 653 B1 ist eine Anlage zum Blasformen von Behältern aus thermoplastischem Polymer bekannt. Dabei legt sich ein Bereich der Blasdüse nicht an den Vorformling selbst an, sondern an die entsprechende Blasform und bewirkt auf diese Weise eine Abdichtung. Damit findet in diesem Falle keine unmittelbare Abdichtung zwischen der Blasdüse und dem Vorformling statt und weiterhin ist eine relativ große Abdichtfläche abzudichten.

Die WO 2006/027092 A1 beschreibt ein Verfahren zur Herstellung einer Kunststoffflasche, wobei hier eine Blasdüse in die Mündung des Vorformlings eingeführt wird, um diesen zu expandieren. In diesem Falle wird eine direkte Abdichtung der Düse gegenüber dem Vorformling erreicht. Gleichwohl ist diese Vorrichtung jedoch in den Fällen kompliziert, in denen einerseits vergleichsweise enge Mündungen vorliegen und andererseits auch noch eine Reckstange verwendet werden soll, um den Vorformling in seiner Längsrichtung zu dehnen. Die US-A1-2004121038 offenbart den Oberbegriff des Anspruchs 1. Der vorliegenden Erfindung liegt daher die Aufgabe zugrunde, eine Vorrichtung zum Expandieren von Kunststoffvorformlingen zu schaffen, welche insbesondere auch für solche Kunststoffvorformlinge anwendbar ist, welche keine oder nur in geringem Maße ausgebildete Tragringe aufweisen.

Dies wird erfindungsgemäß durch eine Vorrichtung nach Anspruch 1 erreicht. Vorteilhafte Ausführungsformen und Weiterbildungen sind Gegenstand der Unteransprüche.

Eine Vorrichtung zum Expandieren von Behältnissen mittels eines gasförmigen Mediums weist eine Düseneinrichtung auf, welche das Behältnis mit dem gasförmigen Medium befüllt, wobei die Düseneinrichtung einen an die Mündung des Behältnisses anlegbaren Anlagekörper aufweist und bevorzugt in einer Längsrichtung des Behältnisses gegenüber dem Behältnis bewegbar ist. Der Anlagekörper weist einen Aufnahmeabschnitt auf, der zur Aufnahme wenigstens eines Bereichs der Mündung geeignet ist und der eine Umfangswandung aufweist, welche den Bereich der Mündung während eines Blasvorganges in einer Umfangsrichtung der Mündung wenigstens teilweise und bevorzugt vollständig umgibt. Weiterhin weist der Anlagekörper einen ringförmig ausgebildeten Andrückabschnitt auf, der oberhalb des Aufnahmeabschnitts angeordnet ist und an einem oberen Rand der Mündung anlegbar ist. Bevorzugt ist der Andrückabschnitt an den oberen Rand der Mündung anlegbar, um einen Raum innerhalb dieses Andrückabschnitts gegenüber einem Raum außerhalb dieses Andrückabschnitts abzudichten. Die Düseneinrichtung ist in der Längsrichtung des Behältnisses bewegebar, es wäre jedoch auch möglich, dass das Behältnis selbst in seiner Längsrichtung bewegt wird. Weiterhin wäre es auch möglich, dass sowohl die Düseneinrichtung als auch das Behältnis in der Längsrichtung des Behältnisses bewegbar sind.

Bei einer weiteren bevorzugten Ausführungsform ist der Andrückabschnitt derart an einem Bereich der Mündung anlegbar, dass eine zwischen einem Andrückabschnitt der Blasdüse und der Mündung gebildete geometrische Dichtungslinie in einer Ebene liegt, welche im Wesentlichen senkrecht zu der Längsrichtung der Behältnisse steht. Damit wird die Dichtwirkung hier nicht durch eine radiale Zustellung eines Bereichs des Düsenkörpers gegenüber dem Behältnis erreicht, sondern durch eine Zustellung in der Längsrichtung des Behältnisses.

Bevorzugt ist der Andrückabschnitt gleichzeitig ein Dichtabschnitt d.h. zwischen dem Andrückabschnitt und der Mündung wird die Dichtlinie erzeugt. Es wäre jedoch auch möglich, dass der Andrückabschnitt das Behältnis in seiner Längsrichtung drückt und auf diese Weise in einem anderen Bereich, beispielsweise unterhalb eines Tragrings des Behältnisses und einem Bereich der Blasform die oben besagte Dichtungslinie bzw. Dichtungsfläche erzeugt.

Damit wird hier bevorzugt vorgeschlagen, einerseits einen Andrückabschnitt vorzusehen, der die Blasdüse gegenüber dem oberen Mündungsrand des Behältnisses abdichtet und gleichzeitig auch einen Stützabschnitt, der die Mündung des Behältnisses in Umfangsrichtung umgibt, um auf diese Weise eine möglichst zentrische Führung des Behältnisses gegenüber der Blasdüse zu erreichen.

Bei dem Merkmal, wonach der Andrückabschnitt oberhalb des Aufnahmeabschnitts angeordnet ist, wird von der üblichen Vorgehensweise ausgegangen, wonach die Vorformlinge stehend mit ihrer Mündung nach oben expandiert werden. Es wäre jedoch auch denkbar, dass die Vorformlinge in einer anderen Positionierung befüllt werden, beispielsweise mit einer Blasdüse von unten. In diesem Falle ist allgemein der Andrückabschnitt weiter von einem Boden des Vorformlings entfernt als der Aufnahmeabschnitt.

Unter einem wenigstens teilweisen Umgeben der Mündung wird verstanden, dass es denkbar wäre, dass der Aufnahmeabschnitt eine Vielzahl von kreissegmentförmig ausgebildeten Stegen aufweist, welche die Mündung umgeben. Auch wäre es möglich, dass der Aufnahmeabschnitt sich in Längsrichtung des Behältnisses erstreckende Schlitze aufweist. Bevorzugt jedoch umgibt der Aufnahmeabschnitt die Mündung des Behältnisses in Umfangsrichtung vollständig und ist dabei als im Wesentlichen zylinderförmiger Körper ausgebildet. Der Andrückabschnitt weist einen sich nach oben verjüngenden Dichtbereich auf. Dabei ist dieser Dichtbereich derart gestaltet, dass er an seinem unteren Ende einen Querschnitt aufweist, der größer als ein Querschnitt der Mündung bzw. des Mündungsrandes des Behältnisses und an seinem oberen Abschnitt einen Querschnitt, der kleiner ist als der Mündungsquerschnitt des Behältnisses. Auf diese Weise kann der Dichtbereich an die Mündung des Behältnisses angelegt werden, so dass die Dichtwirkung direkt an dem Mündungsrand des Vorformlings entsteht. Vorzugsweise verjüngt sich der Andrückabschnitt kegelförmig nach oben.

Vorzugsweise sind der Aufnahmeabschnitt und der Andrückbereich einteilig ausgebildet. Auf diese Weise kann eine besonders vorteilhafte Dichtwirkung erzielt werden.

Bei einer weiteren vorteilhaften Ausführungsform ist der Andrückabschnitt aus einem Metall gefertigt und besonders bevorzugt ist auch der Dichtbereich aus einem Metall gefertigt. Auf diese Weise kann auf schnell verschleißende Dichtungseinrichtungen, beispielsweise aus Gummi, verzichtet werden.

Bei einer weiteren vorteilhaften Ausführungsform ist ein Innenquerschnitt der Umfangswandung an einen Außenquerschnitt der Mündung angepasst. Dies bedeutet, dass besonders bevorzugt der Innenquerschnitt dieser Umfangswandung geringfügig größer ist als der Außenquerschnitt der Mündung, so dass er vor dem eigentlichen Blasvorgang ohne Verkantungen auf die Mündung des Behältnisses aufgeschoben werden kann. Genauer weist der Innenquerschnitt der Umfangswandung einen Querschnitt auf, der an einen Außenumfang eines Gewindes des Behältnisses angepasst ist bzw. geringfügig größer als dieser Außenquerschnitt des Gewindes ist.

Bei einer weiteren vorteilhaften Ausführungsform ist der Innenquerschnitt der Umfangswandung derart an den Außenquerschnitt der Mündung angepasst, dass in einem nicht mit Druckluft beaufschlagten Zustand des Behältnisses die Mündung von der Umfangswandung beabstandet ist und einem mit Druckluft beaufschlagten Zustand des Behältnisses die Mündung des Behältnisses wenigstens abschnittsweise an der Umfangswandung anliegt. Vorzugsweise liegt in einem mit Druckluft beaufschlagten Zustand des Behältnisses die Mündung in Umfangsrichtung im Wesentlichen vollständig an der Umfangswandung an.

Auch ist in einem nicht mit Druckluft beaufschlagten Zustand die Mündung bevorzugt vollständig umfänglich von der Umfangswandung getrennt. Auf diese Weise wird erreicht, dass vor dem eigentlichen Blasvorgang die Düse ohne Verkantungen über die Mündung geführt werden kann und während des eigentlichen Blasvorgangs ein geringes Ausdehnen der Mündung bewirkt, dass die Mündung gegenüber der Umfangswandung abgestützt werden kann, um auf diese Weise starke Verformungen der Mündung zu verhindern.

Bei einer weiteren vorteilhaften Ausführungsform weist die Vorrichtung einen Formträger zur Aufnahme des Vorformlings bzw. Behältnisses während eines Blasvorgangs auf und an diesem Formträger ist ein in Richtung der Blasdüse vorspringender Ring angeordnet. Vorzugsweise erstreckt sich der Ring während eines Blasvorgangs zwischen der Umfangswandung und der Mündung des Behältnisses. Auch dieser vorspringende Ring bewirkt eine erhöhte Stabilität während des eigentlichen Blasvorgangs.

Vorteilhaft wird jedoch der Tragring des Behältnisses während des Expansionsvorgangs an diesen vorspringenden Ring angedrückt und auf diese Weise zwischen dem Tragring des Behältnisses und dem vorspringenden Ring die Dichtwirkung erzeugt. Diese Ausführungsform eignet sich insbesondere für vorhandene Tragringe, welche einen geringen Außenquerschnitt aufweisen. Das Andrücken dieses Tragrings an den vorspringenden Ring wird dabei durch den oben erwähnten Andrückbereich bewirkt, der von oben auf die Mündung des Behältnisses drückt.

Zudem wird durch das Anlegen des Gewindes an die Umfangswandung die Dichtwirkung während des Blasvorgangs erhöht.

Vorzugsweise weist die Blasdüse eine Aufnahmeschräge für den Ring auf. Damit wird während des Blasvorgangs der Ring zwischen diese Aufnahmeschräge und einen Außenquerschnitt der Mündung eingeführt.

Bei einer weiteren vorteilhaften Ausführungsform weist der Andrückabschnitt einen Haltebereich auf, der sich schräg nach Innen erstreckt. Damit ist besonders bevorzugt sowohl der oben erwähnte Dichtbereich vorgesehen als auch der Haltebereich, der sich bevorzugt schräg nach Innen erstreckt. Es wäre jedoch auch möglich, dass der Haltebereich gekrümmt nach Innen ausgebildet ist oder auch mit einem kantigen Querschnitt.

Bei einer weiteren vorteilhaften Ausführungsform ist ein Mündungsrand des Behältnisses zwischen dem Dichtbereich und dem Haltebereich aufnehmbar. Durch diese Aufnahme des Mündungsrandes wird ebenfalls eine Stabilisierung des Mündungsrandes während des Blasvorgangs erreicht.

Bei einer weiteren vorteilhaften Ausführungsform weisen der Dichtbereich und der Haltebereich eine V-förmige Struktur auf. Auf diese Weise kann bereits während des Absenkens der Blasdüse auf den Mündungsrand eine Zentrierung und Ausrichtung des Mündungsrands und damit der Mündung des Behältnisses gegenüber der Blasdüse erreicht werden. Bei einer weiteren vorteilhaften Ausführungsform sind der Dichtbereich und der Haltebereich einteilig ausgebildet.

Weitere Vorteile und Ausführungsformen ergeben sich aus den beigefügten Zeichnungen: Darin zeigen:
- Fig.1: eine erste teilweise Darstellung einer erfindungsgemäßen Vorrichtung;
- Fig. 2: eine erfindungsgemäße Vorrichtung in einer weiteren Ausführungsform;
- Fig. 3: eine Vorrichtung in einer weiteren Ausführungsform; und
- Fig. 4: eine Vorrichtung in einer weiteren Ausführungsform.

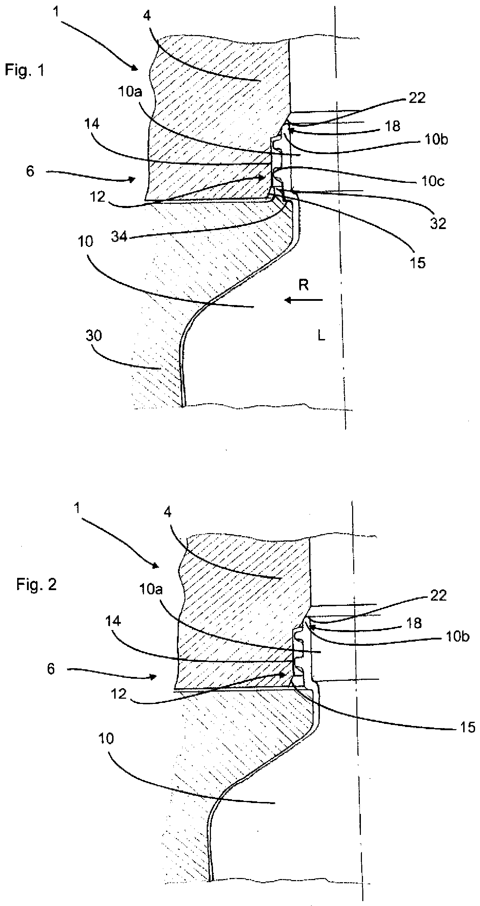

Fig. 1 zeigt eine erfindungsgemäße Vorrichtung 1 zum Expandieren von Behältnissen 10 in einer teilweisen Darstellung. Dargestellt ist in den Figuren 1 - 4 jeweils eine linke Hälfte einer erfindungsgemäßen Vorrichtung. Dabei werden die Behältnisse 10 in einer Blasform 30 aufgenommen und gehalten. Die Behältnisse 10 können dabei durch Druckluft gegen eine Innenwandung dieser Blasform 30 expandiert werden.

Die Vorrichtung weist eine Blasdüse 4 auf, welche auf eine Mündung 10a des Behältnisses aufgesetzt werden kann, um diese anschließend mit einem gasförmigen Medium, wie insbesondere Druckluft, zu befüllen.

Bei der in Fig. 1 gezeigten Ausführungsform weist die Blasdüse 4 einen in seiner Gesamtheit mit 6 bezeichneten Anlagekörper auf, der an die Mündung 10a des Behältnisses anlegbar ist. Dabei umgibt dieser Anlagekörper 6 die Mündung 10a des Behältnisses 10 hier in Umfangsrichtung vollständig und deckt sie auch in einer Längsrichtung L des Behältnisses 10 im Wesentlichen vollständig ab.

Der Anlagekörper 6 weist dabei einen Aufnahmeabschnitt 12 auf, der wenigstens einen Bereich der Mündung 10a in seinem Inneren aufnimmt. Dabei bildet dieser Aufnahmeabschnitt 12 eine Umfangswandung 14 aus, welche in einer radialen Richtung R die Mündung 10a des Behältnisses vollumfänglich umgibt. Während eines Expansionsvorgangs wird auch die Mündung 10a geringfügig (und insbesondere reversibel) expandiert und auf diese Weise drückt sich ein Gewinde 10c des Behältnisses gegen die erwähnte Umfangswandung 14 des Aufnahmeabschnitts 12.

Das Bezugszeichen 18 bezieht sich in seiner Gesamtheit auf einen Andrückabschnitt, der hier wenigstens teilweise von oben auf einen Mündungsrand 10b des Behältnisses drückt. Hier weist dieser Andrückabschnitt 18 einen Dichtbereich 22 auf, der kegelförmig bzw. schräg ausgebildet ist. Beim Aufsetzen der Blasdüse auf das Behältnis 10 kontaktiert dieser Dichtbereich 22 das Behältnis 10 und so entsteht zwischen diesem Dichtbereich 22 und dem Mündungsrand 10b des Behältnisses 10 eine Dichtfläche bzw. Dichtlinie.

Das Bezugszeichen 32 bezieht sich auf einen Ring, der an der Blasform 30 ausgebildet ist und hier keine Abdichtfunktion erfüllt. Weiterhin ist an der Blasform 30 eine Ausnehmung 34 ausgebildet, gegenüber der sich die Mündung 10a des Behältnisses 10 abstützt. Das Bezugszeichen 15 bezieht sich auf eine Einführschräge, welche an der Blasdüse 4 ausgebildet ist, um während der Bewegung der Blasdüse 4 gegenüber dem Behältnis 10 das Einführen der Mündung 10a in den Aufnahmeabschnitt 12 zu erleichtern.

Fig. 2 zeigt eine weitere Ausführungsform einer erfindungsgemäßen Vorrichtung. Im Gegensatz zu der in Fig. 1 gezeigten Ausführungsform ist hier der in Fig. 1 gezeigte Ring 32 nicht vorhanden.

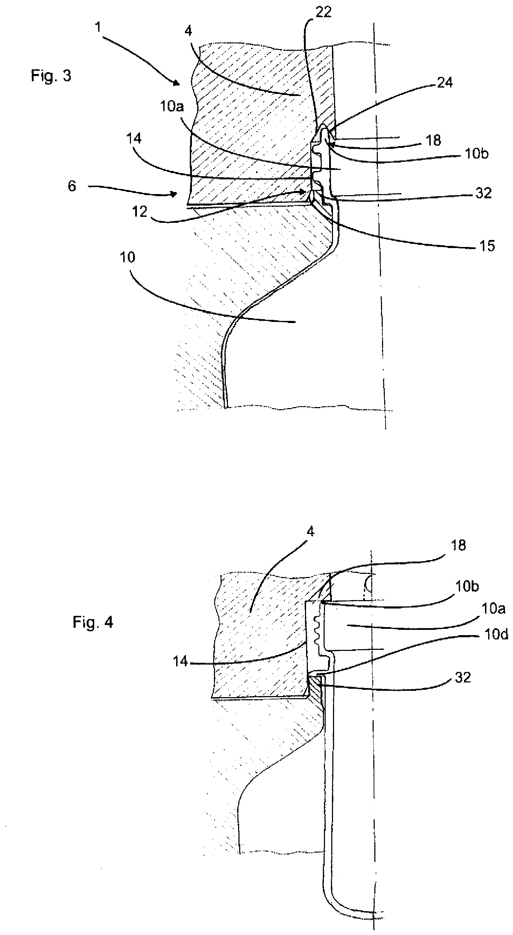

Fig. 3 zeigt eine weitere Ausführungsform einer Vorrichtung 1. Hier ist neben dem eigentlichen Andrückbereich 22 auch ein Haltebereich 24 vorgesehen, wobei der Andrückabschnitt und der Haltebereich 24 V-förmig ausgebildet sind. Dabei ist es möglich, dass die Dichtwirkung zwischen den Andrückbereich 22 und dem Mündungsrand 10b des Behältnisses 10 entsteht. Es wäre jedoch auch möglich, dass die Dichtwirkung zwischen dem Haltebereich 24 und dem Mündungsrand 10b des Behältnisses entsteht. Schließlich kann eine Dichtwirkung auch sowohl an dem Andrückbereich 22 als auch dem Haltebereich 24 entstehen. Auch wäre es möglich, dass der Mündungsrand 10b im Wesentlichen zentrisch in die V-förmige Struktur zwischen dem Andrückbereich 22 und dem Haltebereich 24 eingeführt wird.

Fig. 4 zeigt eine weitere Ausführungsform einer Vorrichtung 1. Im Gegensatz zu der in den Figuren 1 und 2 gezeigten Ausführungsform wird hier eine Abdichtung zwischen einem Tragring 10d des Behältnisses 10 und dem Ring 32 erreicht. Zu diesem Zweck ist weder ein Andrückbereich 18 vorgesehen, der von oben auf den Mündungsrand 10b des Behältnisses 10 drückt und damit den Tragring 10d gegen den vorspringenden Ring 32 an der Blasform drückt. Die hauptsächliche Dichtung erfolgt jedoch durch das Anliegen des expandierenden Tragrings an die Umfangswandung 14. Um die genannte Expansion zu erlauben, weist der Ring 32 einen kleinen Rücksprung gegenüber dem Preform auf.

### Bezugszeichenliste

- 1: Vorrichtung
- 4: Blasdüse
- 6: Anlagekörper
- 10: Behältnis
- 10a: Mündung
- 10b: Mündungsrand
- 10c: Gewinde
- 10d: Tragring
- 12: Aufnahmeabschnitt
- 14: Umfangswandung
- 15: Einführschräge
- 18: Gesamtheit des Andrückabschnitts
- 24: Haltebereich
- 22: Dichtbereich
- 30: Blasform
- 32: Ring
- 34: Ausnehmung
- L: Längsrichtung
- R: radiale Richtung

## Patentansprüche

1. Vorrichtung (1) zum Expandieren von Behältnissen (10) mittels eines gasförmigen Mediums, mit einer Düseneinrichtung (4), welche das Behältnis (10) mit dem gasförmigen Medium befüllt, wobei die Düseneinrichtung (4) einen an eine Mündung (10a) des Behältnisses (10) anlegbaren Anlagekörper (6) aufweist und wobei die Düseneinrichtung (4) in einer Längsrichtung (L) des Behältnisses gegenüber dem Behältnis (10) bewegbar ist,
wobei
der Anlagekörper (6) einen Aufnahmeabschnitt (12) aufweist, der zur Aufnahme wenigstens eines Bereichs der Mündung (10a) geeignet ist und der eine Umfangswandung (14) aufweist, welche den Bereich der Mündung (10a) während eines Blasvorgangs in einer Umfangsrichtung der Mündung (10a) wenigstens teilweise umgibt und einen ringförmig ausgebildeten Andrückabschnitt (18), der oberhalb des Aufnahmeabschnitts (12) angeordnet ist und an einen oberen Rand (10b) der Mündung (10a) anlegbar ist,
**dadurch gekennzeichnet, dass**
der Andrückabschnitt (18) einen sich nach oben hin verjüngenden Dichtbereich (22) aufweist, wobei
- dieser Dichtbereich (22) derart gestaltet ist, dass er an seinem unteren Ende einen Querschnitt aufweist, der größer ist als ein Querschnitt der Mündung (10a) des Behältnisses und an seinem oberen Abschnitt einen Querschnitt, der kleiner ist als der Mündungsquerschnitt des Behältnisses, sodass auf diese Weise der Dichtbereich (22) an die Mündung (10a) des Behältnisses (10) anlegbar ist und so die Dichtwirkung direkt an einem Mündungsrand des Behältnisses entsteht.

2. Vorrichtung (1) nach Anspruch 1,
**dadurch gekennzeichnet, dass**
der Andrückabschnitt (18) derart gestaltet ist, dass ein Raum innerhalb des Andrückabschnitts (18) gegenüber einem Raum außerhalb des Andrückabschnitts (18) abgedichtet wird.

3. Vorrichtung (1) nach wenigstens einem der vorangegangenen Ansprüche,
**dadurch gekennzeichnet, dass**
der Aufnahmeabschnitt (12) und der Andrückabschnitt (18) einteilig ausgebildet sind.

4. Vorrichtung (1) nach wenigstens einem der vorangegangenen Ansprüche,
**dadurch gekennzeichnet, dass**
sich der Dichtbereich (22) kegelförmig nach oben hin verjüngt.

5. Vorrichtung (1) nach wenigstens einem der vorangegangenen Ansprüche,
**dadurch gekennzeichnet, dass**
der Andrückabschnitt (18) aus einem Metall gefertigt ist.

6. Vorrichtung (1) nach wenigstens einem der vorangegangenen Ansprüche,
**dadurch gekennzeichnet, dass**
ein Innenquerschnitt der Umfangswandung (14) an einen Aussenquerschnitt der Mündung (10a) angepasst ist.

7. Vorrichtung (1) nach Anspruch 6,
**dadurch gekennzeichnet, dass**
der Innenquerschnitt der Umfangswandung (14) derart an den Aussenquerschnitt der Mündung (10a) angepasst ist, dass in einem nicht mit Druckluft beaufschlagten Zustand des Behältnisses die Mündung (10a) von der Umfangswandung (14) beabstandet ist und in einem mit Druckluft beaufschlagten Zustand des Behältnisses (10) die Mündung (10a) des Behältnisses (10) wenigstens abschnittsweise an der Umfangswandung (14) anliegt.

8. Vorrichtung (1) nach wenigstens einem der vorangegangenen Ansprüche,
**dadurch gekennzeichnet, dass**
die Vorrichtung (1) einen Formträger (30) zur Aufnahme des Behältnisses während eines Blasvorgangs aufweist und an diesem Formträger ein in Richtung der Blasdüse (4) vorspringender Ring (32) angeordnet ist.

9. Vorrichtung (1) nach Anspruch 8,
**dadurch gekennzeichnet, dass**
sich der Ring (32) während eines Blasvorgangs zwischen der Umfangswandung (14) und der Mündung (10a) erstreckt.

10. Vorrichtung (1) nach Anspruch 9,
**dadurch gekennzeichnet, dass**
die Blasdüse eine Aufnahmeschräge für den Ring (32) aufweist.

11. Vorrichtung (1) nach wenigstens einem der vorangegangenen Ansprüche,
**dadurch gekennzeichnet, dass**
der Andrückabschnitt einen Haltebereich (24) aufweist, der sich schräg nach innen erstreckt.

12. Vorrichtung (1) nach Anspruch 11,
**dadurch gekennzeichnet, dass**
ein Mündungsrand des Behältnisses zwischen dem Dichtbereich (22) und dem Haltebereich (24) aufnehmbar ist.

13. Vorrichtung (1) nach Anspruch 11,
**dadurch gekennzeichnet, dass**
der Dichtbereich (22) und der Haltebereich (24) eine V-förmige Struktur ausbilden.

14. Vorrichtung (1) nach wenigstens einem der vorangegangenen Ansprüche 11-13,
**dadurch gekennzeichnet, dass**
der Dichtbereich (22) und der Haltebereich (24) einteilig ausgebildet sind.

## Claims

1. Device (1) for expanding containers (10) by means of a gaseous medium, with a nozzle device (4) which fills the container (10) with the gaseous medium, wherein the nozzle device (4) has a placement body (6) which can be placed on a mouth (10a) of the container (10), and wherein the nozzle device (4) is movable relative to the container (10) in a longitudinal direction (L) of the container,
wherein the placement body (6) has a receiving portion (12) which is suitable for receiving at least one region of the mouth (10a), and has a peripheral wall (14) that at least partially surrounds the region of the mouth (10a) in a peripheral direction of the mouth (10a) during a blowing process, and an annular press-on portion (18) that is arranged above the receiving portion (12) and can be placed on an upper edge (10b) of the mouth (10a),
**characterised in that** the press-on portion (18) has a sealing region (22) tapering towards the top, wherein this sealing region (22) is configured such that at its lower end it has a cross-section which is larger than a cross-section of the mouth (10a) of the container, and at its upper portion a cross-section which is smaller than the mouth cross-section of the container, so that in this way the sealing region (22) can be placed on the mouth (10a) of the container (10) and thus the sealing effect is created directly at a mouth edge of the container.

2. Device (1) according to claim 1,
**characterised in that**
the press-on portion (18) is configured such that a space inside the press-on portion (18) is sealed against a space outside the press-on portion (18).

3. Device (1) according to at least one of the preceding claims,
**characterised in that**
the receiving portion (12) and the press-on portion (18) are formed integrally.

4. Device (1) according to at least one of the preceding claims,
**characterised in that**
the sealing region (22) tapers conically towards the top.

5. Device (1) according to at least one of the preceding claims,
**characterised in that**
the press-on portion (18) is made of a metal.

6. Device (1) according to at least one of the preceding claims,
**characterised in that**
an inner cross-section of the peripheral wall (14) is adapted to an outer cross-section of the mouth (10a).

7. Device (1) according to claim 6,
**characterised in that**
the inner cross-section of the peripheral wall (14) is adapted to the outer cross-section of the mouth (10a) such that, when the container is in a state not pressurised with compressed air, the mouth (10a) is spaced from the peripheral wall (14), and when the container (10) is in a state pressurised with compressed air, the mouth (10a) of the container (10) lies on the peripheral wall (14) at least in portions.

8. Device (1) according to at least one of the preceding claims,
**characterised in that**
the device (1) comprises a mould carrier (30) for receiving the container during a blowing process, and a ring (32) protruding in the direction of the blowing nozzle (4) is arranged on this mould carrier.

9. Device (1) according to claim 8,
**characterised in that**
during a blowing process, the ring (32) extends between the peripheral wall (14) and the mouth (10a).

10. Device (1) according to claim 9,
**characterised in that**
the blowing nozzle comprises a receiving chamfer for the ring (32).

11. Device (1) according to at least one of the preceding claims,
**characterised in that**
the press-on portion has a holding region (24) which extends radially inward.

12. Device (1) according to claim 11,
**characterised in that**
a mouth edge of the container can be received between the sealing region (22) and the holding region (24).

13. Device (1) according to claim 11,
**characterised in that**
the sealing region (22) and the holding region (24) form a V-shaped structure.

14. Device (1) according to at least one of the preceding claims 11 - 13,
**characterised in that**
the sealing region (22) and the holding region (24) are formed integrally.

## Revendications

1. Dispositif (1) destiné à dilater des récipients (10) au moyen d'un milieu gazeux, comprenant un moyen à buse (4), lequel remplit le récipient (10) du milieu gazeux, dans lequel le moyen à buse (4) comprend un corps d'appui (6) pouvant s'appliquer contre une embouchure (10a) du récipient (10), et dans lequel le moyen à buse (4) étant mobile par rapport au récipient (10) dans une direction longitudinale (L) du récipient, dans lequel
le corps d'appui (6) comprend une section de logement (12), qui étant adaptée à loger au moins une partie de l'embouchure (10a) et qui comprend une paroi périphérique (14), laquelle entoure au moins partiellement la partie de l'embouchure (10a) pendant une procédure de soufflage dans une direction périphérique de l'embouchure (10a) et une section de pression (18) de forme annulaire, qui étant agencée au-dessus de la section de logement (12) et qui peut être appliquée sur un bord supérieur (10b) de l'embouchure (10a), **caractérisé en ce que** la section de pression (18) comprend une zone d'étanchéité (22) se rétrécissant vers le haut, dans laquelle cette zone d'étanchéité (22) est conçue de telle manière qu'elle présente à son extrémité inférieure une section transversale qui est supérieure à une section transversale de l'embouchure (10a) du récipient et au niveau de sa section supérieure une section transversale qui est inférieure à la section transversale d'embouchure du récipient, de sorte que de cette manière, la zone d'étanchéité (22) peut être appliquée contre l'embouchure (10a) du récipient (10) et ainsi l'effet d'étanchéité est obtenu directement contre un bord d'embouchure du récipient.

2. Dispositif (1) selon la revendication 1,
**caractérisé en ce que**
la section de pression (18) est conçue de telle manière qu'un espace à l'intérieur de la section de pression (18) est étanchéifié par rapport à un espace à l'extérieur de la section de pression (18).

3. Dispositif (1) selon au moins l'une des revendications précédentes,
**caractérisé en ce que**
la section de logement (12) et la section de pression (18) sont réalisées d'une seule pièce.

4. Dispositif (1) selon au moins l'une des revendications précédentes,
**caractérisé en ce que**
la zone d'étanchéité (22) se rétrécit de façon conique vers le haut.

5. Dispositif (1) selon au moins l'une des revendications précédentes,
**caractérisé en ce que**
la section de pression (18) est fabriquée à partir d'un métal.

6. Dispositif (1) selon au moins l'une des revendications précédentes,
**caractérisé en ce qu'**
une section transversale intérieure de la paroi périphérique (14) est adaptée à une section transversale extérieure de l'embouchure (10a).

7. Dispositif (1) selon la revendication 6,
**caractérisé en ce que**
la section transversale intérieure de la paroi périphérique (14) est adaptée à la section transversale extérieure de l'embouchure (10a) de telle sorte que, lorsque le récipient n'est pas soumis à l'effet d'un air comprimé, l'embouchure (10a) est espacée de la paroi périphérique (14) et que, lorsque le récipient (10) est soumis à l'effet d'un air comprimé, l'embouchure (10a) du récipient (10) s'applique au moins en partie contre la paroi périphérique (14).

8. Dispositif (1) selon au moins l'une des revendications précédentes,
**caractérisé en ce que**
le dispositif (1) comprend un support de moule (30) destiné à loger le récipient pendant une procédure de soufflage et un anneau (32) faisant saillie en direction de la buse de soufflage (4) est agencé sur ce support de moule.

9. Dispositif (1) selon la revendication 8,
**caractérisé en ce que**
l'anneau (32), pendant une procédure de soufflage, s'étend entre la paroi périphérique (14) et l'embouchure (10a).

10. Dispositif (1) selon la revendication 9,
**caractérisé en ce que**
la buse de soufflage comprend un chanfrein de logement pour l'anneau (32).

11. Dispositif (1) selon au moins l'une des revendications précédentes,
**caractérisé en ce que**
la section de pression comprend une zone de retenue (24) qui s'étend de manière inclinée vers l'intérieur.

12. Dispositif (1) selon la revendication 11,
**caractérisé en ce qu'**
un bord d'embouchure du récipient peut être logé entre la zone d'étanchéité (22) et la zone de retenue (24).

13. Dispositif (1) selon la revendication 11,
**caractérisé en ce que**
la zone d'étanchéité (22) et la zone de retenue (24) constituent une structure en forme de V.

14. Dispositif (1) selon au moins l'une des revendications précédentes 11 à 13,
**caractérisé en ce que**
la zone d'étanchéité (22) et la zone de retenue (24) sont formées d'une seule pièce.
